# EUROPÄISCHE PATENTSCHRIFT

(11) **EP 3 093 404 B1**
(45) Veröffentlichungstag und Bekanntmachung des Hinweises auf die Patenterteilung: **25.09.2019**
(21) Anmeldenummer: 16000908.0
(22) Anmeldetag: 22.04.2016
(51) Int. Cl.: E03D 11/14, E03C 1/05, E03C 1/322, G01L 5/24

(54) **SANITÄRHALTERUNG, EINE SANITÄRANORDNUNG UND VERFAHREN ZUM BETRIEB EINER SANITÄRANORDNUNG**
SANITARY SUPPORT, A SANITARY DEVICE AND METHOD FOR OPERATING A SANITARY DEVICE
SUPPORT SANITAIRE, ENSEMBLE SANITAIRE ET PROCEDE DE FONCTIONNEMENT D'UN ENSEMBLE SANITAIRE

(30) Priorität: 30.04.2015 DE 102015002784
(43) Veröffentlichungstag der Anmeldung: 16.11.2016
(73) Patentinhaber: Grohe AG, 58675 Hemer (DE)
(72) Erfinder: Schönbeck, Heiko, 58675 Hemer (DE); Jung, Andreas, 58730 Fröndenberg (DE); Fuchs, Norbert, 32425 Minden (DE); Hägner, Stefan, 31675 Bückeburg (DE)

(56) Entgegenhaltungen:
- EP-A1- 0 670 394
- EP-A2- 1 057 943
- WO-A2-2005/108687
- DE-A1- 3 230 339
- DE-U1- 8 811 649
- DE-U1- 9 303 865
- DE-U1- 29 709 198
- GB-A- 2 326 719

## Beschreibung

Die vorliegende Erfindung betrifft eine Sanitärhalterung, eine Sanitäranordnung und ein Verfahren zum Betrieb einer Sanitäranordnung.

Zur Montage von Sanitärbauteilen an einer beispielsweise gemauerten oder betonierten Wand sind sogenannte Vorwandmontagegestelle bekannt. Solche Vorwandmontagegestelle werden sowohl im Neubau als auch bei der Altbausanierung verwendet. Beispiele für Vorwandmontagegestelle finden sich in den Patentschriften EP 0670394 A1 und DE 29709198 U1. Ein Vorwandmontagegestell umfasst in der Regel zumindest zwei vertikale, auf einem Tragboden abgestützte Ständer, die mittels mindestens einer horizontalen Traverse miteinander verbunden sind. In der Regel wird das Sanitärbauteil an der Traverse verankert beziehungsweise befestigt. Das Vorwandmontagegestell ist in der Regel mittels eines Wandhalters beziehungsweise einer Wandhalterung und/oder mindestens einer Schraubverbindung in der Wand verankert beziehungsweise an dieser befestigt.

Zur automatischen Auslösung eines Spülvorgangs beziehungsweise eines Waschvorgangs ist es bekannt, im sichtbaren Bereich um ein Sanitärbauteil beziehungsweise im Umfeld eines Sanitärbauteils einen Sensor anzuordnen, der mittels optischer Erfassung einen Erfassungsbereich um das Sanitärbauteil überwacht. Bei einem entsprechenden Sensor kann es sich um einen Kapazitivsensor, insbesondere Näherungsschalter, einem optischen Infrarotsensor, einen Bewegungsmelder, einen Raumüberwachungssensor oder dergleichen handeln. Diesen Sensoren ist gemein, dass sie im sichtbaren beziehungsweise im von außen zugänglichen Bereich um ein Sanitärbauteil herum montiert sein müssen, um eine optische Erfassung durchführen zu können. Diese optischen Sensoren sind in der Regel aufwendig zu montieren und können aufgrund von Verschmutzung in ihrer Erfassungsgenauigkeit beeinträchtigt werden. Zudem birgt die Montage im sichtbaren Bereich um ein Sanitärbauteil die Gefahr, dass der Sensor beschädigt wird.

Hiervon ausgehend liegt der vorliegenden Erfindung die Aufgabe zugrunde, die mit Bezug auf den Stand der Technik geschilderten Probleme zumindest teilweise zu lösen. Insbesondere sollen eine Sanitärhalterung und eine Sanitäranordnung angegeben werden, die mit Standardkeramiken verwendet werden können, geringe Fertigungskosten ermöglichen und eine Nutzungserkennung bieten, die eine hohe Funktionssicherheit aufweist und auch gegen unbeabsichtigte oder gar gewollte Beschädigung geschützt ist. Zudem sollen Montagekosten reduziert werden. Insbesondere soll auch ein Verfahren zum Betrieb einer Sanitäranordnung angegeben werden, welche eine Nutzungserkennung mit hoher Funktionssicherheit ermöglicht, die auch gegen Vandalismus geschützt ist. Zudem soll das Verfahren auch mit Standardkeramiken für Sanitärbauteile durchführbar sein.

Diese Aufgaben werden gelöst mit einer Sanitärhalterung, einer Sanitäranordnung und einem Verfahren zum Betrieb einer Sanitäranordnung mit den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierfür dient eine Sanitärhalterung, umfassend mindestens einen Wandhalter, mindestens eine Verbindungsstange und mindestens einen Sensor. Der Sensor ist zumindest an dem mindestens einen Wandhalter oder der mindestens einen Verbindungsstange angeordnet. Mittels des mindestens einen Sensors ist zumindest eine Kraft, die auf zumindest den mindestens einen Wandhalter oder die mindestens eine Verbindungsstange wirkt, oder eine Dehnung zumindest des mindestens einen Wandhalters oder der mindestens einen Verbindungsstange bestimmbar.

Diese technische Lösung ermöglicht in vorteilhafter Weise eine Nutzungserkennung eines Sanitärbauteils, wobei Standardkeramiken für das Sanitärbauteil verwendet werden können und wobei der Sensor in einem fertig montierten Zustand von außen betrachtet nicht sichtbar ist, wodurch dieser auch gegenüber ungewollter Beschädigung oder gar Vandalismus geschützt ist. Zudem ermöglicht die vorliegende Lösung eine Reduzierung von Fertigungskosten, weil Standardkeramiken für das Sanitärbauteil verwendet werden können. Da die vorgeschlagene Lösung auch mit standardisierten beziehungsweise einfach aufzubauenden Montagegestellen und/oder Wandhalterungen kombinierbar ist, können zusätzliche Installations- beziehungsweise Montagekosten vermieden werden. Aufgrund dessen der Sensor nicht sichtbar beziehungsweise verdeckt und geschützt angeordnet ist, kann eine hohe Funktionssicherheit des Sensors gewährleistet werden. Zudem kann für den zumindest eine Kraft oder Dehnung messenden Sensor eine (relativ) robuste Sensortechnologie verwendet werden. Die hier vorgestellte Nutzungserkennung kann für das Auslösen automatischer Aktionen während und/oder nach der Nutzung des Sanitärbauteils, insbesondere für das Auslösen einer Spülung und/oder einer Geruchsabsaugung, verwendet werden.

Diese Lösung stellt auch eine vorteilhafte Alternative gegenüber beispielsweise einem wegaufnehmenden Sensor in/an dem Sanitärbauteil selbst dar. So könnte ein Winkelsensor in ein Drehgelenk einer WC-Brille eingebaut werden. Es wäre zudem auch möglich, einen optischen Sensor, insbesondere Lichtsensor, in eine Keramik des Sanitärbauteils zu integrieren. Dies birgt jedoch den Nachteil, dass für solche Sanitärbauteile keine Standardkeramiken verwendet werden können und bei einem defekten Sensor eventuell das gesamte Sanitärbauteil getauscht werden muss.

Unter einem Sanitärbauteil wird hier insbesondere ein WC beziehungsweise ein WC-Becken, ein Bidet oder dergleichen verstanden. Hierbei handelt es sich jeweils um Sanitärbauteile, auf die sich ein Nutzer während der Benutzung setzen kann. Das Sanitärbauteil ist in der Regel mit beziehungsweise aus Keramik gebildet. Hierzu können Standardformen beziehungsweise Standardbauteile verwendet werden, die hier auch als Standardkeramiken bezeichnet werden. Dies ist jedoch nicht zwingend, weil das Sanitärbauteil auch mit beziehungsweise aus Metall gebildet sein kann.

Die Sanitärhalterung kann im vorliegenden Fall als ein Vormontageset, eine vormontierte Baugruppe oder dergleichen verstanden werden. Insbesondere ist die Sanitärhalterung ein Teil einer Gesamtbaugruppe, bevorzugt einer Sanitäranordnung.

Mittels der Sanitärhalterung kann ein Sanitärbauteil mittelbar oder unmittelbar mit einer Wand, insbesondere einer gemauerten oder betonierten Wand, fest und/oder lösbar verbunden werden. Soll ein Sanitärbauteil mittelbar mit der Wand verbunden werden, so dient die Sanitärhalterung insbesondere zur Abstützung und/oder Befestigung eines Montagegestells, an dem das Sanitärbauteil befestigt werden kann. Soll das Sanitärbauteil unmittelbar mit der Wand verbunden werden, so dient die Sanitärhalterung selbst zur (direkten) Abstützung und/oder (direkten) Befestigung des Sanitärbauteils selbst an der Wand. Hierbei wird das Sanitärbauteil direkt an der Sanitärhalterung befestigt, insbesondere festgeschraubt.

Bevorzugt weist die Sanitärhalterung zur Abstützung und/oder Befestigung der Sanitärhalterung an der Wand mindestens einen Wandhalter auf. Der Wandhalter bzw. einer der Mehrzahl von Wandhalter kann jedoch auch dazu dienen, die Sanitärhalterung an einem Boden, insbesondere einem Tragboden, zu befestigen beziehungsweise abzustützen. Der Wandhalter kann an einer beispielsweise gemauerten oder betonierten Wand und/oder an einem Boden, insbesondere einem Tragboden, befestigt sein. Der Wandhalter kann als Gussteil, zum Beispiel aus beziehungsweise mit Kunststoff oder Metall, gebildet sein. Der Wandhalter kann eine Grundplatte aufweisen, von der aus sich ein Schaft mit einer inneren Gewindebohrung beziehungsweise einem inneren Durchgang hin zu einem Montagegestell beziehungsweise hin zu einem Sanitärkörper erstreckt. In den Durchgang beziehungsweise in die Gewindebohrung des Schafts ist eine Verbindungsstange einbringbar und fixierbar. Der Wandhalter kann mit Stützfüßen gebildet sein, die die Grundplatte in einem vorgebbaren Abstand zu einer Wand halten. Der Wandhalter ist in der Regel mit mindestens einer Bohrung ausgeführt, so dass er mittels mindestens einer Schraubverbindung an der Wand befestigt werden kann. Der Wandhalter kann zumindest teilweise auch in die Wand eingelassen werden. Im einfachsten Fall kann der Wandhalter in der Art einer Verankerung oder mittels Dübel und Schraube an der Wand und/oder an dem Boden fixiert sein, wobei eine Verbindungsstange in den Wandhalter eindrehbar ist.

Die Sanitärhalterung umfasst zudem mindestens eine Verbindungsstange. Die Verbindungsstange dient zur Verbindung eines Montagegestells und/oder eines Sanitärbauteils mit der Wandhalterung. Die Verbindungsstange kann mit einem Verbindungsmittel, insbesondere einem Außengewinde, Rastzungen, einer Clipverbindung oder dergleichen, ausgeführt sein. Bevorzugt ist die Verbindungsstange in der Art eines Gewindebolzens oder einer Kopfschraube gebildet. An einem der Wandhalterung gegenüberliegenden Endbereich der Verbindungsstange kann ein Lagerteil zur Verbindung der Verbindungsstange mit einem Montagegestell vorgesehen sein. Es ist jedoch auch möglich, dass ein Sanitärbauteil mit entsprechenden Öffnungen direkt beziehungsweise unmittelbar auf die mindestens eine Verbindungsstange aufgeschoben wird. Hierbei kann die Verbindungsstange als Gewindestange ausgeführt sein, wobei das Sanitärbauteil mittels mindestens einer Distanzscheibe und/oder mindestens einer Mutter auf der Gewindestange fixiert beziehungsweise befestigt wird.

Wenn sich ein Nutzer auf ein Sanitärbauteil setzt, welches mittels der Sanitärhalterung an einer Wand befestigt ist, so wirkt eine im Wesentlichen senkrechte Kraft, insbesondere Gewichtskraft, auf das Sanitärbauteil. Infolge dieser Benutzung kommt es zu einer Biegebeanspruchung, Querkraftbeanspruchung und/oder Längskraftbeanspruchung (Zug-/Druckkraft) zumindest des Wandhalters oder der Verbindungsstange. Da der Wandhalter und/oder die Verbindungsstange in der Regel mit/aus Metall gebildet sind, bewirkt ein solches Biegemoment beziehungsweise eine solche Kraft auch eine Dehnung, insbesondere an einer Oberfläche, zumindest des Wandhalters oder der Verbindungsstange. Der Sensor ist zur Bestimmung zumindest einer Kraft oder einer Dehnung ausgebildet beziehungsweise eingerichtet. Der Sensor kann daher eine Dehnung des Wandhalters und/oder der Verbindungsstange und/oder eine auf diese ausgeübte Kraft (Zug-/Druckkraft) detektieren. Unter einer Längskraft ist hier eine Zug- oder Druckkraft im Wesentliche in einer axialen Richtung bezogen auf die Mittelachse der Verbindungsstange verstanden. Eine Querkraft ist im Wesentlichen senkrecht zu der Längskraft verstanden.

Nach einer vorteilhaften Ausgestaltung wird vorgeschlagen, dass der mindestens eine Sensor mit mindestens einer Abdeckung verdeckt ist. Eine solche Abdeckung kann beispielsweise auf dem Wandhalter und/oder der Verbindungsstange steckt, drehbar gelagert und/oder befestigt sein. Mittels der Abdeckung können auch Teilbereiche des Wandhalters und/oder der Verbindungsstange verdeckt werden. Mittels der Abdeckung kann erreicht werden, dass der Sensor von außen nicht sichtbar und/oder nicht ohne geeignetes Werkzeug zugänglich ist. Somit kann der Sensor gegen unbefugten Zugriff, insbesondere Vandalismus, geschützt werden. Zudem kann die Funktionssicherheit des Sensors erhöht werden, weil eine Verschmutzung des Sensors reduziert wird. Die Abdeckung kann mit beziehungsweise aus Kunststoff oder Metall gebildet sein. Die Abdeckung kann zudem der Anlage äußerer Beplankungen dienen. Wird die Sanitärhalterung im Rahmen einer Vorwandinstallation verwendet, so können beispielsweise Beplankungsteile, Abdeckplatten, Schaumkörper, Elemente einer Blende oder dergleichen an der beziehungsweise auf der Abdeckung befestigt werden.

Nach einer weiteren vorteilhaften Ausgestaltung wird vorgeschlagen, dass der mindestens eine Sensor mit mindestens einem Dehnungsmessstreifen gebildet ist. Mittels eines Dehnungsmessstreifens (DMS) können dehnende und/oder stauchende Verformungen eines Bauteils, insbesondere einer Bauteiloberfläche, gemessen werden. Aufgrund einer solchen Verformung ändert sich der elektrische Widerstand des Dehnungsmessstreifens, wodurch ein Kraft- und/oder Dehnungssensor bereitgestellt ist, der ein elektrisches Messsignal ausgeben kann. Der mindestens eine Dehnungsmessstreifen kann als Folien-, Draht- oder Halbleiterdehnungsmessstreifen bereitgestellt sein. Es ist auch möglich, mehrere Dehnungsmessstreifen mit verschiedenen Anordnungen beziehungsweise Ausrichtungen übereinander anzubringen, um Informationen über Kräfte und/oder Dehnungen in mehreren Richtungen zu erhalten. Bevorzugt wird ein Messsignal des Dehnungsmessstreifens als Widerstandsänderung in einer elektrischen Schaltung, insbesondere einer Wheatstone'schen Brückenschaltung, erfasst. Weiter bevorzugt wird der mindestens eine Dehnungsmessstreifen auf einen Teilbereich einer Oberfläche zumindest des Wandhalters oder der Verbindungsstange aufgebracht, insbesondere aufgeklebt. Bei der Oberfläche kann es sich um eine Innen- oder eine Außenoberfläche des jeweiligen Bauteils handeln.

Nach einer weiteren vorteilhaften Ausgestaltung wird vorgeschlagen, dass der mindestens eine Sensor mindestens ein piezoelektrischer Sensor ist. Ein piezoelektrischer Sensor beruht auf dem sogenannten piezoelektrischen Effekt. Der piezoelektrische Sensor ermöglicht eine (direkte) Umwandlung einer auf ihn wirkenden (Druck-) Kraft beziehungsweise einer mechanischen Oberflächenspannung in ein elektrisches Spannungssignal. Der mindestens eine piezoelektrische Sensor kann mittelbar oder unmittelbar an zumindest den mindestens einen Wandhalter oder der mindestens einen Verbindungsstange angeordnet und/oder abgestützt sein. Zudem kann der mindestens eine piezoelektrische Sensor mittelbar oder unmittelbar zumindest mit einer Wand oder einem Sanitärbauteil in Wirkverbindung bringbar sein.

In der Regel ist der piezoelektrische Sensor in der Längsrichtung ausgerichtet. In dieser Längsrichtung kann der piezoelektrische Sensor eine Druckkraft messen. Eine mittelbare Abstützung des piezoelektrischen Sensors an der Verbindungsstange kann beispielsweise derart erfolgen, dass der piezoelektrische Sensor an einer Mutter beziehungsweise Distanzscheibe angeordnet beziehungsweise abgestützt ist, die auf der Verbindungsstange angeordnet beziehungsweise befestigt ist. Wenn der piezoelektrische Sensor unmittelbar auf der Verbindungsstange angeordnet ist, so kann er beispielsweise eine Querkraft, die auf die Verbindungsstange wirkt, messen.

Der mindestens eine piezoelektrische Sensor kann auch an einer Anlagefläche beziehungsweise an einer Kontaktfläche eines Verbindungsmittels angeordnet sein. Ein entsprechendes Verbindungsmittel kann beispielsweise eine Mutter, Scheibe, Distanzscheibe, eine Schraube mit einem Schraubenkopf oder dergleichen sein. Eine Biegebeanspruchung des Wandhalters und/oder der Verbindungsstange kann beispielsweise als eine Druckkraft zwischen einer Anlagefläche des Wandhalters und einer dieser Anlagefläche zugeordneten Mutter beziehungsweise Distanzscheibe gemessen werden. Eine entsprechende Anlagefläche liegt beispielsweise an einer Verbindungsstelle des Wandhalters vor, an der der Wandhalter mittels einer Schraubverbindung an der Wand befestigt wird. Eine Anlagefläche kann auch in dem Bereich vorliegen, in dem ein Montagegestell oder ein Sanitärbauteil mittels einer Schraubverbindung und/oder einer Mutter beziehungsweise Distanzscheibe an der Sanitärhalterung befestigt wird. Bei der Anlagefläche handelt es sich demnach zum Beispiel um eine Schraubenanlagefläche, Mutternanlagefläche, Distanzscheibenanlagefläche oder dergleichen. Es ist auch möglich, einen piezoelektrischen Sensor in eine Verbindungsstange und/oder einen Wandhalter zu integrieren.

Nach einem weiteren Aspekt wird eine Sanitäranordnung vorgeschlagen, umfassend mindestens einen Wandhalter, mindestens eine Verbindungsstange, ein Montagegestell, ein Sanitärbauteil und mindestens einen Sensor. Der Sensor ist zumindest an dem mindestens einen Wandhalter, der mindestens einen Verbindungsstange, dem Montagegestell oder dem Sanitärbauteil angeordnet. Mittels des Sensors ist zumindest eine Kraft, die auf zumindest den mindestens einen Wandhalter, die mindestens eine Verbindungsstange, das Montagegestell oder das Sanitärbauteil wirkt, oder eine Dehnung zumindest des mindestens einen Wandhalters, der mindestens einen Verbindungsstange, des Montagegestells oder des Sanitärbauteils bestimmbar.

Die Sanitäranordnung betrifft hier insbesondere einen montierten Zustand und insbesondere eine sogenannte Vorwandinstallation. Das Montagegestell betrifft hier insbesondere ein Vorwandmontagestell, bevorzugt nach Art eines stabilen Rahmens. Das Montagegestell umfasst bevorzugt mindestens zwei im Wesentlichen vertikal ausgerichtete Ständer und mindestens eine im Wesentlichen horizontal verlaufende Traverse. Weiter bevorzugt werden jeweils zwei Ständer mittels mindestens einer Traverse verbunden. Hierzu ist die mindestens eine Traverse mittels einer kraftschlüssigen, formschlüssigen oder stoffschlüssigen Verbindung mit den Ständern verbunden. Besonders bevorzugt ist die mindestens eine Traverse mittels mindestens einer Schraubverbindung mit den Ständern verbunden. Hierzu können die Ständer und die Traversen über entsprechende Bohrlöcher verfügen. Als "stoffschlüssig" werden hier Verbindungen bezeichnet, bei denen Verbindungspartner durch atomare oder molekulare Kräfte zusammengehalten werden. Bei einer hier als "formschlüssig" bezeichneten Verbindung ist einer der Verbindungspartner einem anderen im Weg, blockiert also zumindest teilweise dessen Bewegungsmöglichkeit, beispielsweise mittels eines Eingriffs oder eines Kontakts. "Kraftschlüssig" bedeutet hier insbesondere, dass die gegenseitige Verschiebung von Verbindungspartnern verhindert wird, solange die durch die Haftreibung bewirkte Gegenkraft nicht überschritten wird.

Die Ständer sind auf einem Boden beziehungsweise Tragboden aufgestellt beziehungsweise abgestützt. Das Montagegestell kann mittels des mindestens einen Wandhalters und der mindestens einen Verbindungsstange mit einer Wand lösbar verbunden beziehungsweise an dieser befestigt sein.

Bevorzugt ist das Sanitärbauteil mittelbar oder unmittelbar mit mindestens einer Traverse des Montagegestells verbunden. Eine unmittelbare Verbindung kann derart gestaltet sein, dass das Sanitärbauteil mittels mindestens zwei Öffnungen, insbesondere Bohrungen, auf mindestens zwei Bolzen beziehungsweise Gewindestangen zur Befestigung aufgeschoben wird. Diese Bolzen beziehungsweise Gewindestangen sind fest oder lösbar mit der Traverse verbunden. Das aufgeschobene Sanitärbauteil kann mittels Muttern und Distanzscheiben auf den Bolzen beziehungsweise Gewindestangen festgeschraubt werden. Eine mittelbare Verbindung zwischen der mindestens einen Traverse und dem Sanitärbauteil kann derart erfolgen, dass das Sanitärbauteil mittels eines zusätzlichen Befestigungsmittels an der Traverse befestigt ist. Ein entsprechendes Befestigungsmittel kann in der Art einer Befestigungsplatte beziehungsweise Anschlussplatte ausgeführt sein. Hierbei ist das Sanitärbauteil mittels mindestens zwei Schraubverbindungen mit dem Befestigungsmittel verbunden und das Befestigungsmittel ist wiederum mittels mindestens zwei Schraubverbindungen mit der Traverse verbunden. Hierzu kann die Traverse zum Beispiel mindestens zwei Bohrungen und/oder mindestens eine langlochartige Ausnehmung aufweisen, die sich in der Traverse horizontal erstreckt. Im Sinne einer Feinjustierung oder Ausrichtung kann hierbei das Sanitärbauteil mit dem Befestigungsmittel entlang der langlochartigen Ausnehmung in der Traverse verschoben werden, bevor das Befestigungsmittel mit dem Sanitärbauteil an der Traverse festgeschraubt wird. Hierzu kann eine sogenannte Feststellschraubverbindung vorgesehen sein.

Bezüglich des mindestens einen Sensors wird auf die vorangehenden Ausführungen zu dem mindestens einen Sensor vollumfänglich Bezug genommen. Bevorzugt ist der mindestens eine Sensor mit mindestens einem Dehnungsmessstreifen gebildet. Alternativ oder kumulativ kann der mindestens eine Sensor auch mindestens einen piezoelektrischen Sensor umfassen. Demnach können in einer Sanitäranordnung beziehungsweise in einer Sanitärhalterung beide Sensortypen gleichzeitig verbaut sein.

Auch bei der Sanitäranordnung kann der mindestens eine Sensor an einer Anlagefläche eines Verbindungsmittels angeordnet sein. Es kann mindestens ein piezoelektrischer Sensor zwischen einer Unterseite des Montagegestells und einem Boden, auf dem das Montagegestell steht, angeordnet sein. Darüber hinaus kann mindestens ein piezoelektrischer Sensor auf einer Unterseite des Sanitärbauteils vorgesehen sein, wenn das Sanitärbauteil zum Beispiel mit seiner Unterseite auf dem Boden aufgesetzt beziehungsweise abgestützt ist. Hierbei ist der piezoelektrische Sensor zwischen der Unterseite des Sanitärbauteils und dem Boden angeordnet.

Der mindestens eine Dehnungsmessstreifen kann auch auf einer Innenoberfläche oder einer Außenoberfläche zumindest des Montagegestells, der mindestens einen Verbindungsstange oder des mindestens einen Bolzens zur Befestigung des Sanitärbauteils an dem Montagegestell angeordnet, insbesondere aufgeklebt, sein. In mindestens eine Verbindungsstange und/oder in mindestens einen Bolzen kann auch mindestens ein piezoelektrischer Sensor integriert sein.

Nach einer weiteren vorteilhaften Ausgestaltung wird vorgeschlagen, dass der mindestens eine Sensor verdeckt angeordnet ist. Aufgrund der verdeckten Anordnung ist der mindestens eine Sensor von außen betrachtet nicht sichtbar. Somit kann der mindestens eine Sensor gegenüber Vandalismus geschützt werden. Der mindestens eine Sensor kann (von außen betrachtet) mittels zumindest eines Teils des Montagegestells, des Wandhalters, der Verbindungsstange oder des Sanitärbauteils verdeckt sein. Alternativ oder kumulativ kann der mindestens eine Sensor auch mit einer (separaten) Abdeckung verdeckt sein. Bevorzug ist der mindestens eine Sensor mittels mindestens einer Blende beziehungsweise mittels mindestens einer Beplankung, insbesondere mindestens einer Vorwandbeplankung, verdeckt. Eine Blende beziehungsweise Vorwandbeplankung kann ein Teil einer Vorwandinstallation sein. Hierbei stellen die Blende beziehungsweise die Vorwandbeplankung eine äußere Sichtoberfläche der Vorwandinstallation dar. Die Blende beziehungsweise Vorwandbeplankung kann hierbei auf das Montagegestell, insbesondere Vorwandmontagestell, aufgebracht und/oder von diesem gehalten sein. Mit anderen Worten ausgedrückt, befindet sich der mindestens eine Sensor somit bevorzugt zwischen einer Wand und einer Blende beziehungsweise Beplankung, insbesondere Vorwandbeplankung, und ist dementsprechend von außen nicht sichtbar.

Nach einer weiteren vorteilhaften Ausgestaltung wird vorgeschlagen, dass das Montagegestell mit mindestens einer Traverse gebildet ist, wobei an der mindestens einen Traverse mindestens ein Dehnungsmessstreifen angeordnet ist. Der mindestens eine Dehnungsmessstreifen kann auf einer Innenoberfläche oder einer Außenoberfläche der mindestens einen Traverse angeordnet, insbesondere aufgeklebt, sein. Handelt es sich bei dem Sanitärbauteil beispielsweise um ein WC-Becken, das an der Traverse befestigt beziehungsweise stabilisiert ist, so kommt es bei einem Nutzungsvorgang, wenn beispielsweise eine Person auf dem WC-Becken sitzt, zu einer (minimalen) Durchbiegung der Traverse infolge der auf das WC-Becken wirkenden Gewichtskraft der Person. Dieser minimale Biegeprozess während der Nutzungsphase wird mittels eines Sensors, insbesondere mittels des mindestens einen Dehnungsmessstreifens, erfasst und bevorzugt auch mittels einer elektronischen Schalteinrichtung ausgewertet. Bei einer solchen Messung ist es auch möglich, den mindestens einen Dehnungsmessstreifen derart auf einer Außenoberfläche oder einer Innenoberfläche der Traverse anzuordnen und/oder auszurichten, dass eine Torsion der Traverse messbar ist.

Nach einer weiteren vorteilhaften Ausgestaltung wird vorgeschlagen, dass eine Kontrolleinheit vorgesehen ist, die mit zumindest einer Spülsteuerung oder mindestens einem Sanitärzubehör in Wirkverbindung steht. Die Kontrolleinheit ist insbesondere zur Erfassung, Überwachung und/oder Auswertung von elektrischen Signalen des mindestens einen Sensors ausgebildet beziehungsweise eingerichtet. Die Spülsteuerung ist insbesondere zur Vorgabe eines Spülvolumens, insbesondere mittels mindestens eines Wasserventils, ausgebildet beziehungsweise eingerichtet. Die Spülsteuerung kann Signale beziehungsweise Befehle der Kontrolleinheit erhalten. Die Spülsteuerung kann auch in Wirkverbindung mit einem Spülkasten stehen.

Ein Sanitärzubehör betrifft hier beispielsweise eine Geruchsabsaugung, insbesondere mit einem Ventilator, eine Sanitärbauteilheizung, einen Duftspender, eine automatisch ausklappbare und/oder ausfahrbare Toilettenpapier- und/oder Handtuchausgabevorrichtung, einen ausklappbaren und/oder ausfahrbaren Müllbehälter, eine Lampe oder dergleichen. Jedes dieser Sanitärzubehörteile - soweit verfügbar und gewünscht - kann mittels der Kontrolleinheit aktiviert beziehungsweise angesteuert werden. Es können auch beliebige Kombinationen dieser Sanitärzubehörteile vorhanden sein. Insbesondere ist mindestens ein Sanitärzubehör in die Vorwandinstallation integriert.

Nach einem weiteren Aspekt wird ein Verfahren zum Betrieb einer Sanitäranordnung vorgeschlagen. Die Sanitäranordnung kann gemäß den vorangehenden Erläuterungen ausgebildet sein. Das Verfahren umfasst zumindest die folgenden Schritte:
a) Überwachen eines Lastsignals des mindestens einen Sensors mittels einer Kontrolleinheit,
b) Auswerten des Lastsignals mittels der Kontrolleinheit,
c) Erkennen einer Benutzung des Sanitärbauteils aufgrund einer Änderung des Lastsignals im Vergleich zu einem Referenzwert,
d) Aktivieren zumindest einer Spülsteuerung oder mindestens eines Sanitärzubehörs in Abhängigkeit des Lastsignals mittels der Kontrolleinheit.

Die vorangehend angedeutete Reihenfolge der Schritte ergibt sich bei einem regulären Betriebsablauf der Sanitäranordnung. Nach Beendigung des Verfahrens kann dieses insbesondere bei Schritt a) neu beginnen. Die Schritte a) bis c) können kontinuierlich durchgeführt werden, auch während einer Benutzung des Sanitärbauteils.

Die hier betrachteten Signale können als elektrische Signale aufgefasst werden. Der Referenzwert ist vorgebbar und veränderbar. Liegt der Referenzwert beispielsweise sehr nahe an einem sogenannten Nullwert, so kann eine sehr genaue beziehungsweise sensitive Messung durchgeführt werden. Ein Nullwert beschreibt hier beispielsweise ein elektrisches Signal, das dann vorliegt, wenn das Sanitärbauteil (vollständig) unbelastet ist.

In Schritt c) wird die Änderung des Lastsignals insbesondere als ein Überschreiten des Referenzwerts verstanden. Hierbei kann der Referenzwert auch als Schwellwert oder dergleichen verstanden sein. Wird ein solcher Referenzwert beziehungsweise Schwellwert in einem gewissen Abstand zu einem Nullwert vorgegeben, so kann ein Erkennen einer Benutzung erst dann erfolgen, wenn eine vorgebbare Mindestgewichtskraft auf das Sanitärbauteil wirkt. So kann verhindert werden, dass eine Benutzung erkannt wird, obwohl lediglich ein leichteres Objekt, wie beispielsweise eine Wasserflasche oder ein Stapel Handtücher, auf dem Sanitärbauteil abgelegt wurde. Kausal für die Änderung des Lastsignals ist hier eine Belastung des Sanitärbauteils.

Nach einer weiteren vorteilhaften Ausgestaltung wird vorgeschlagen, dass in einem Schritt e) ein Erkennen eines Benutzungsendes des Sanitärbauteils aufgrund einer erneuten Änderung des Lastsignals hin zu dem Referenzwert und in einem Schritt f) ein Auslösen eines Spülvorgangs mittels der Spülsteuerung erfolgt, wenn in Schritt e) das Benutzungsende erkannt wurde.

Das Erkennen des Benutzungsendes erfolgt aufgrund einer Entlastung des Sanitärbauteils. Eine Änderung des Lastsignals hin zu dem Referenzwert bedeutet hier insbesondere, dass sich das Lastsignal verringert und unter den Referenzwert beziehungsweise einen Schwellwert sinkt. Hierbei verläuft das Lastsignal von einem Wert oberhalb des Referenzwerts hin zu diesem Referenzwert. Mit anderen Worten ausgedrückt, sinkt das Lastsignal ausgehend von einem Wert oberhalb des Referenzwerts hin zu einem Nullwert. Das Auslösen eines Spülvorgangs kann derart erfolgen, dass mindestens ein Wasserventil geöffnet wird und/oder ein Spülsignal an einen Spülkasten gesendet wird. Hier kann auch eine Zeitverzögerung zwischen dem gemessenen Benutzungsende und dem Auslösen des Spülvorgangs vorgesehen sein.

Nach einer weiteren vorteilhaften Ausgestaltung wird vorgeschlagen, dass in Schritt e) eine Benutzungsdauer ermittelt und in Schritt f) ein Spülvolumen in Abhängigkeit der Benutzungsdauer vorgegeben wird. Das Spülvolumen kann beispielweise vergrößert werden, wenn eine lange Benutzungsdauer gemessen wurde. Dies ist jedoch nicht zwingend, weil das Spülvolumen auch fest vorgegeben sein kann.

Nach einer weiteren vorteilhaften Ausgestaltung wird vorgeschlagen, dass in einem Schritt g) ein Nachkalibrieren des Referenzwerts erfolgt, wenn das Sanitärbauteil nicht benutzt wird und ein Wiederholen des Auswertens des Lastsignals eine bleibende Abweichung zu einem Kontrollwert ergibt. Der Kontrollwert betrifft hier insbesondere einen Wert des Lastsignals in einem unbelasteten Zustand und ohne plastische Verformung des Bauteils an dem der Sensor angebracht ist. Ein unbelasteter Zustand des Sanitärbauteils kann auch hier als ein Nullwert des Lastsignals aufgefasst werden. In einem plastisch nicht verformten Zustand wird in der Regel der Kontrollwert dem Nullwert entsprechen.

Ist das Sanitärbauteil beispielsweise an einer Traverse eines Montagegestells befestigt, so kann es, über einen längeren Zeitraum betrachtet, zu einer plastischen Verformung des Montagegestells, insbesondere der Traverse, kommen. Dies entspricht einer Veränderung einer Nullstellenposition der Traverse. Um diesem Effekt entgegenzuwirken, kann ein Nachkalibrieren in einem Schritt g) erfolgen. Bevorzugt wird der Referenzwert beim Nachkalibrieren entsprechend einer Differenz zwischen tatsächlich vorliegendem Nullwert und Kontrollwert angeglichen. Dies bedeutet mit anderen Worten auch, dass für die Nutzungserkennung nicht der absolute Wert des Lastsignals entscheidend ist, sondern die Veränderung des Lastsignals in Bezug auf den Referenzwert beziehungsweise in Bezug auf einen Schwellwert.

Die vorstehend im Zusammenhang mit der Sanitärhalterung erörterten Details, Merkmale und vorteilhaften Ausgestaltungen können entsprechend auch bei der hier vorgestellten Sanitäranordnung und/oder dem hier vorgestellten Verfahren auftreten und umgekehrt. Insoweit wird auf die dortigen Ausführungen zur näheren Charakterisierung der Merkmale vollumfänglich Bezug genommen.

Die vorstehend im Zusammenhang mit der Sanitäranordnung erörterten Details, Merkmale und vorteilhaften Ausgestaltungen können entsprechend auch bei der vorangehend vorgestellten Sanitärhalterung und/oder dem hier vorgestellten Verfahren auftreten und umgekehrt. Insbesondere wird auch hier auf die dortigen Ausführungen zur näheren Charakterisierung der Merkmale vollumfänglich Bezug genommen.

Die Erfindung sowie das technische Umfeld werden nachfolgend anhand der Figuren erläutert. Die Figuren zeigen Details, die die Erfindung nicht beschränken sollen. Insbesondere ist nicht anzunehmen, dass alle Details einer Figur separat nur in der dargestellten Weise ausgeprägt sein müssen oder nur in der dargestellten Kombination miteinander auftreten können. Sollte eine solche Situation vorliegen, wird hier explizit darauf hingewiesen. Es zeigen schematisch:
- Fig. 1:: eine Schnittdarstellung einer Sanitärhalterung,
- Fig. 2:: eine perspektivische Ansicht einer Sanitäranordnung,
- Fig. 3:: eine perspektivische Ansicht eines Montagegestells,
- Fig. 4:: eine Frontansicht einer Traverse mit einem Sensor, und
- Fig. 5:: eine Draufsicht auf eine Traverse mit einem Sensor.

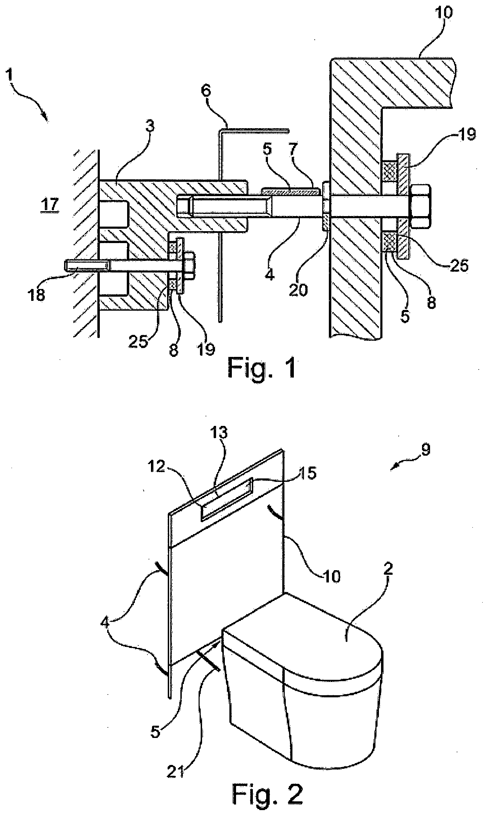

Fig. 1 zeigt eine Sanitärhalterung 1 in einer schematischen Schnittdarstellung. Die Sanitärhalterung 1 umfasst einen Wandhalter 3, eine Verbindungsstange 4 und mehrere Sensoren 5. Der Wandhalter 3 ist mittels einer Schraubverbindung 18 an der Wand 17 befestigt. Zur Befestigung des Wandhalters 3 an der Wand 17 ist zwischen einem Schraubenkopf der Schraubverbindung 18 und dem Wandhalter eine Distanzscheibe 19 vorgesehen. Im Bereich der Anlagefläche 25 zwischen Wandhalter 3 und Distanzscheibe 19 sind zwei piezoelektrische Sensoren 8 angeordnet.

Der Wandhalter 3 ist im Bereich eines Schaftteils des Wandhalters 3 mit einer Verbindungsstange 4 verbunden. Hierzu ist die Verbindungsstange 4 in den Wandhalter 3 eingeschraubt. Die Verbindungsstange 4 ist beispielhaft in der Art einer Kopfschraube gebildet. An einer Außenoberfläche der Verbindungsstange 4 ist ein Sensor 5, nämlich ein Dehnungsmessstreifen 7, angeordnet. Der Sensor 5 ist zumindest teilweise von einer Abdeckung 6 verdeckt. Hierzu ist die Abdeckung 6 drehbar auf dem Schaftteil des Wandhalters 3 gelagert.

In Fig. 1 ist zudem schematisch ein Montagegestell 10 angedeutet, das mittels der Sanitärhalterung 1 an der Wand 17 befestigt ist. Hierzu wird das Montagegestell 10 mittels der Verbindungsstange 4 gehalten beziehungsweise gestützt. Beispielhaft ist das Montagegestell 10 hier zwischen einem Sicherungsring 20 und einer Distanzscheibe 19 gehalten. Das Montagegestell 10 weist hierzu beispielhaft eine Durchgangsbohrung auf, durch die die Verbindungsstange 4 hindurchgeführt ist. Zwischen der Distanzscheibe 19 und dem Montagegestell 10 ist eine Anlagefläche 25 für ein Verbindungsmittel, nämlich die Distanzscheibe 19, an dem Montagegestell 10 gebildet. Im Bereich dieser Anlagefläche 25 sind zwei Sensoren 5, nämlich zwei piezoelektrische Sensoren 8, vorgesehen. Die piezoelektrischen Sensoren 8 sind hier mittelbar, nämlich mittels der Distanzscheibe 19, an der Verbindungsstange 4 abgestützt.

Fig. 2 zeigt eine perspektivische und schematische Darstellung einer Sanitäranordnung 9. Die Sanitäranordnung 9 ist hier beispielhaft ohne einen Wandhalter 3 dargestellt. Es ist ein Sanitärbauteil 2, nämlich ein WC-Becken, zu erkennen. Das Sanitärbauteil 2 ist aus Keramik gebildet. Es handelt sich hierbei um ein Standardbauteil, eine sogenannte Standardkeramik.

In Fig. 2 ist zudem ein Montagegestell 10 abgebildet. Das Montagegestell 10 ist rückseitig mit Verbindungsstangen 4 ausgeführt. In einem unteren Bereich ist an dem Montagegestell 10 ein Sensor 5 angeordnet. Das Sanitärbauteil 2 kann auf Bolzen 21 des Montagegestells 10 aufgeschoben werden und mittels der Bolzen 21 an dem Montagegestell 10 befestigt werden. Hier ist zu erkennen, dass in einem montierten Zustand das Sanitärbauteil 2 von außen beziehungsweise von vorne betrachtet den Sensor 5 verdeckt. Somit ist der Sensor 5 für einen Benutzer von außen nicht sichtbar und nicht ohne zusätzliches Werkzeug erreichbar. Hierdurch ist der Sensor 5 gegen Vandalismus geschützt.

In einem oberen Bereich des Montagegestells 10 ist ein Spülkasten 15 vorgesehen. Im Bereich des Spülkastens 15 sind hier beispielhaft eine Kontrolleinheit 12 und eine Spülsteuerung 13 angeordnet. Die Kontrolleinheit 12 kann Signale des Sensors 5 empfangen. Zudem kann die Kontrolleinheit 12 wiederum Signale an die Spülsteuerung 13 weitergeben. Hierbei kann der Kontrolleinheit 12 ein Messverstärker vorgeschaltet werden, der ein entprechend verstärktes Messsignal wahlweise in analoger oder digitaler Form an eine Auswerteeinheit der Kontrolleinheit 12 weiterleitet.

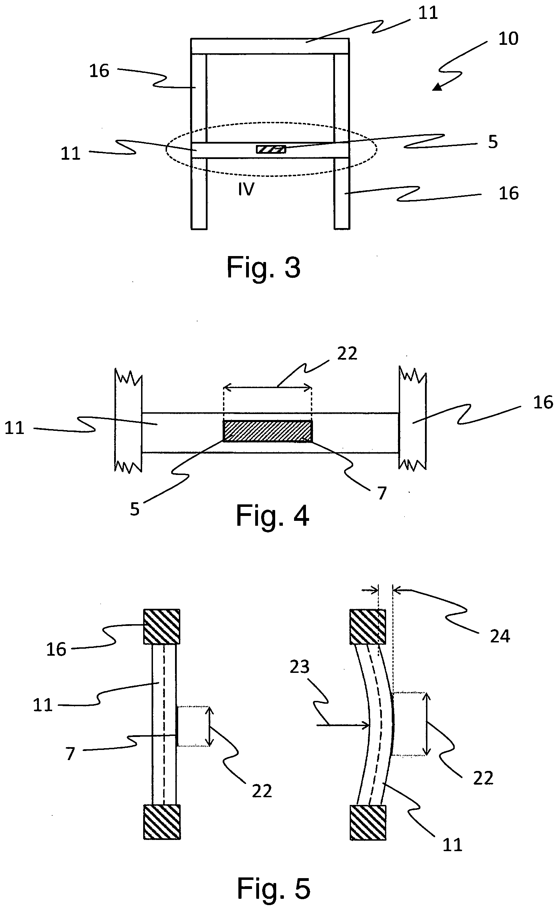

In Fig. 3 ist eine perspektivische und schematische Ansicht eines Montagegestells 10 gezeigt. Das Montagegestell 10 ist beispielhaft mit zwei im Wesentlichen vertikal verlaufenden Ständern 16 und zwei im Wesentlichen horizontal verlaufenden Traversen 11 gebildet. Die Ständer 16 sind mittels der Traversen 11 miteinander verbunden. Die Ansicht ist hier frontal beziehungsweise von vorne auf das Montagegestell 10 gerichtet. An der unteren Traverse 11 ist frontseitig ein Sensor 5 angeordnet.

In Fig. 4 ist eine Frontansicht einer Traverse 11 mit einem Sensor 5 gezeigt. Bei der Darstellung nach Fig. 4 handelt es sich um eine Detailansicht, die in der Fig. 3 mit IV gekennzeichnet ist. Auf einer Außenoberfläche der Traverse 11 ist frontseitig ein Sensor 5, nämlich ein Dehnungsmessstreifen 7, angeordnet. Der Dehnungsmessstreifen 7 hat eine Sensorlänge 22. Die Sensorlänge 22 ist hier als eine Ausbreitung in horizontaler Richtung verstanden. In Fig. 4 ist die Traverse 11 links und rechts jeweils mit einem Ständer 16 verbunden.

In Fig. 5 ist eine Draufsicht auf die in Fig. 4 gezeigte Traverse 11 dargestellt. Hierbei sind die Ständer 16 geschnitten dargestellt. Auf der linken Seite der Fig. 5 sind die Traverse 11 und der Dehnungsmessstreifen 7 in einem unbelasteten beziehungsweise nicht gedehnten Zustand gezeigt. Hier liegt eine sogenannte Nullstellung der Traverse 11 vor. Der Dehnungsmesstreifen 7 hat somit eine nicht gedehnte Sensorlänge 22 beziehungsweise eine Ausgangslänge.

Auf der rechten Seite der Fig. 5 ist die Traverse 11 in einem belasteten Zustand gezeigt. Im Vergleich zu dem unbelasteten Zustand beziehungsweise der Nullstellung der Traverse 11, ist die Traverse 11 im belasteten Zustand ausgelenkt beziehungsweise gebogen und weist eine Auslenkung 24 auf. Eine entsprechende Belastung der Traverse 11 kann sich dadurch einstellen, dass an der Traverse 11 frontseitig ein Sanitärbauteil 2 befestigt ist, welches von einer Person benutzt wird. Bei der Benutzung des Sanitärbauteils 2 setzt sich die Person in der Regel auf das Sanitärbauteil 2, wobei die Gewichtskraft der Person eine im Wesentlichen vertikale Kraft auf das Sanitärbauteil 2 auswirkt.

Aufgrund der Befestigung des Sanitärbauteils 2 an der Traverse 11 kommt es zu einer im Wesentlichen mittigen Durchbiegung der Traverse 11. Je nach Art der Befestigung des Sanitärbauteils 2 an der Traverse 11, kommt es unter anderem zu einer nach vorne gerichteten, in Fig. 5 nach rechts gerichteten Zugkraft auf die Traverse 11. Diese Belastung ist hier mittels einer resultierenden Kraft 23 in der Art einer Querkraft auf die Traverse 11 angedeutet.

Aufgrund der Durchbiegung der Traverse 11 kommt es zu einer Dehnung im Bereich der Außenoberfläche der Traverse 11, an der der Dehnungsmessstreifen 7 angeordnet ist. Aufgrund dessen erfährt der Dehnungsmessstreifen 7 eine Dehnung beziehungsweise eine Längenänderung. Diese Dehnung ist mittels der gedehnten Sensorlänge 22 dargestellt. Die gedehnte Sensorlänge 22, welche rechts in der Fig. 5 zu erkennen ist, ist größer als die nicht gedehnte Sensorlänge 22, wie sie im linken Teil der Fig. 5 dargestellt ist. Diese Dehnung beziehungsweise Längenänderung der Sensorlänge 22 ist mittels des Dehnungsmessstreifens 7 messbar beziehungsweise erfassbar. Somit kann mittels des Dehnungsmessstreifens 7 eine Nutzungserkennung beziehungsweise eine Nutzungserfassung durchgeführt werden.

Damit werden eine Sanitärhalterung, eine Sanitäranordnung und ein Verfahren zum Betrieb einer Sanitäranordnung aufgezeigt, wobei ein Sensor, der eine Nutzungserkennung ermöglicht, von außen nicht sichtbar angeordnet und gegenüber Vandalismus geschützt ist. Zudem können für das Sanitärbauteil Standardkeramiken verwendet werden, was zu einer Reduzierung der Fertigungskosten führt.

### Bezugszeichenliste

- 1: Sanitärhalterung
- 2: Sanitärbauteil
- 3: Wandhalter
- 4: Verbindungsstange
- 5: Sensor
- 6: Abdeckung
- 7: Dehnungsmessstreifen
- 8: piezoelektrischer Sensor
- 9: Sanitäranordnung
- 10: Montagegestell
- 11: Traverse
- 12: Kontrolleinheit
- 13: Spülsteuerung
- 14: Sanitärzubehör
- 15: Spülkasten
- 16: Ständer
- 17: Wand
- 18: Schraubverbindung
- 19: Distanzscheibe
- 20: Sicherungsring
- 21: Bolzen
- 22: Sensorlänge
- 23: Kraft
- 24: Auslenkung
- 25: Anlagefläche

## Patentansprüche

1. Sanitäranordnung (9), umfassend mindestens einen Wandhalter (3), mindestens eine Verbindungsstange (4), ein Montagegestell (10), ein Sanitärbauteil (2) und mindestens einen Sensor (5), wobei die mindestens eine Verbindungsstange (4) das Montagegestell (10) oder das Sanitärbauteil (2) oder beide mit dem Wandhalter (3) verbindet und wobei der mindestens eine Sensor (5) der mindestens einen Verbindungsstange (4), abgestützt oder angeordnet ist und mit dem zumindest eine Kraft, die auf die mindestens eine Verbindungsstange (4) wirkt, bestimmbar ist, wobei der mindestens eine Sensor (5) ein piezoelektrischer Sensor (5) ist,
- der durch Anordnung an einer Mutter oder einer Distanzscheibe (19), die auf der Verbindungsstange (4) angeordnet beziehungsweise befestigt ist, mittelbar an der mindestens einen Verbindungsstange (4) abgestützt ist, oder
- der unmittelbar auf der Verbindungsstange (4) angeordnet ist.

2. Sanitäranordnung nach Patentanspruch 1, wobei der mindestens eine Sensor (5) verdeckt angeordnet ist.

3. Sanitäranordnung nach Patentanspruch 1 oder 2, wobei das Montagegestell (10) mit mindestens einer Traverse (11) gebildet ist, wobei an der mindestens einen Traverse (11) mindestens ein Dehnungsmessstreifen (7) angeordnet ist.

4. Sanitäranordnung nach einem der Patentansprüche 1 bis 3, mit einer Kontrolleinheit (12), die mit zumindest einer Spülsteuerung (13) oder mindestens einem Sanitärzubehör (14) in Wirkverbindung steht.

5. Verfahren zum Betrieb einer Sanitäranordnung nach einem der Patentansprüche 1 bis 4, umfassend zumindest die folgenden Schritte:
a) Überwachen eines Lastsignals des mindestens einen piezoelektrischen Sensors (5) mittels einer Kontrolleinheit (12),
b) Auswerten des Lastsignals mittels der Kontrolleinheit (12),
c) Erkennen einer Benutzung des Sanitärbauteils (2) aufgrund einer Änderung des Lastsignals im Vergleich zu einem Referenzwert,
d) Aktivieren zumindest einer Spülsteuerung (13) oder mindestens eines Sanitärzubehörs (14) in Abhängigkeit des Lastsignals mittels der Kontrolleinheit (12).

6. Verfahren nach Patentanspruch 5, wobei in einem Schritt e) ein Erkennen eines Benutzungsendes des Sanitärbauteils (2) aufgrund einer erneuten Änderung des Lastsignals hin zu dem Referenzwert und in einem Schritt f) ein Auslösen eines Spülvorgangs mittels der Spülsteuerung (13) erfolgt, wenn in Schritt e) das Benutzungsende erkannt wurde.

7. Verfahren nach Patentanspruch 6, wobei in Schritt e) eine Benutzungsdauer ermittelt und in Schritt f) ein Spülvolumen in Abhängigkeit der Benutzungsdauer vorgegeben wird.

8. Verfahren nach einem der Patentansprüche 5 bis 7, wobei in einem Schritt g) ein Nachkalibrieren des Referenzwertes erfolgt, wenn das Sanitärbauteil (2) nicht benutzt wird und ein wiederholendes Auswerten des Lastsignals eine bleibende Abweichung zu einem Kontrollwert ergibt.

## Claims

1. Sanitary arrangement (9), comprising at least one wall holder (3), at least one connecting rod (4), a mounting frame (10), a sanitary component (2) and at least one sensor (5), wherein the at least one connecting rod (4) connects the mounting frame (10) or the sanitary component (2) or both to the wall holder (3) and wherein the at least one sensor (5) is supported or arranged on the at least one connecting rod (4) and with the sensor the at least one force acting on the at least one connecting rod (4) can be determined, wherein the at least one sensor (5) is a piezo-electric sensor (5),
- which is indirectly supported on the at least one connecting rod (4) by arrangement on a nut or a spacer disc (19) that is arranged on or attached to the connecting rod (4), or
- which is arranged directly on the connecting rod (4).

2. Sanitary arrangement according to patent claim 1, wherein the at least one sensor (5) is arranged so as to be concealed.

3. Sanitary arrangement according to patent claim 1 or 2, wherein the mounting frame (10) is formed with at least one crosspiece (11), at least one strain gauge (7) being arranged on the at least one crosspiece (11).

4. Sanitary arrangement according to any one of patent claims 1 to 3, having a monitoring unit (12) which is in operative connection with at least one flush controller (13) or at least one sanitary accessory (14).

5. Method of operating a sanitary arrangement according to any one of patent claims 1 to 4, comprising at least the following steps:
a) monitoring of a load signal of the at least one piezo-electric sensor (5) by means of a monitoring unit (12),
b) analysis of the load signal by means of the monitoring unit (12),
c) detection of use of the sanitary component (2) on the basis of a change in the load signal in comparison with a reference value,
d) activation of at least one flush controller (13) or at least one sanitary accessory (14) in dependence upon the load signal by means of the monitoring unit (12).

6. Method according to patent claim 5, wherein in a step e) the end of use of the sanitary component (2) is detected on the basis of a new change in the load signal towards the reference signal and in a step f) a flushing operation is triggered by means of the flush controller (13) if the end of use has been detected in step e).

7. Method according to patent claim 6, wherein in step e) duration of use is determined and in step f) a flushing volume is specified in dependence upon the duration of use.

8. Method according to any one of patent claims 5 to 7, wherein in a step g) a recalibration of the reference value takes place if the sanitary component (2) is not being used and a repeated analysis of the load signal reveals a persistent deviation from a control value.

## Revendications

1. Dispositif sanitaire (9) comprenant au moins un support de paroi (3), au moins une tige de liaison (4), un bâti (10), un équipement sanitaire (2) et au moins un capteur (5),
la tige de liaison (4) reliant le bâti (10) ou l'équipement sanitaire (2) ou les deux, au support de paroi (3) et le capteur (5) de la tige de liaison (4) est en appui ou est installé et il détermine au moins une force s'exerçant sur la tige de liaison (4), le capteur (5) étant un capteur piézoélectrique (5), fixé par un montage ou une rondelle d'écartement (19) installée sur la tige de liaison (4) ou fixé à celle-ci, en s'appuyant directement sur la tige de liaison (4) ou installé indirectement sur la tige de liaison (4).

2. Dispositif sanitaire selon la revendication 1,
dans lequel le capteur (5) est installé de façon cachée.

3. Dispositif sanitaire selon la revendication 1 ou 2,
selon lequel le bâti (10) comporte au moins une traverse (11) et cette traverse (11) comporte au moins une jauge de déformation (7).

4. Dispositif sanitaire selon l'une des revendications 1 à 3,
comportant une unité de contrôle (12) coopérant avec au moins une commande de rinçage (13) ou au moins un accessoire sanitaire (14).

5. Procédé de fonctionnement d'un dispositif sanitaire selon l'une des revendications 1 à 4,
comprenant au moins les étapes suivantes consistant à :
a) surveiller un signal de charge de ce capteur piézoélectrique (5) à l'aide d'une unité de contrôle (12),
b) exploiter le signal de charge à l'aide de l'unité de contrôle (12),
c) reconnaître l'utilisation du composant sanitaire (2) à partir d'une variation du signal de charge par comparaison avec une valeur de référence,
d) activer au moins une commande de rinçage (13) ou au moins un accessoire sanitaire (14) en fonction du signal de charge à l'aide de l'unité de commande (12).

6. Procédé selon la revendication 5,
selon lequel, dans l'étape e) on détecte la fin de l'utilisation du composant sanitaire (2) en se fondant sur une nouvelle modification du signal de charge en direction de la valeur de référence et dans une étape f) on commande le déclenchement d'une opération de pulvérisation à l'aide de la commande de rinçage (13), lorsque dans l'étape e), on a reconnu la fin de l'utilisation.

7. Procédé selon la revendication 6,
selon lequel, dans l'étape e) on détermine une durée d'utilisation et dans l'étape f) on détermine le volume de rinçage en fonction de la durée d'utilisation.

8. Procédé selon l'une des revendications 5 à 7,
selon lequel dans l'étape g) on effectue un post-calibrage de la valeur de référence si le composant sanitaire (2) n'est pas utilisé et si une exploitation répétée du signal de charge mentionne un écart constant d'une valeur de contrôle.
